# EUROPEAN PATENT APPLICATION

(11) **EP 4 488 868 A1**
(43) Date of publication of application: **08.01.2025**
(21) Application number: 24185824.0
(22) Date of filing: 01.07.2024
(51) Int. Cl.: G06F 30/10, G06T 19/00, E04C 3/02, E04C 3/04, G06F 111/04

(54) **AUTOMATIC CORNER TRIM FOR MEMBER CREATION**

(30) Priority: 07.07.2023 US 202363512447 P; 31.10.2023 US 202318498219
(71) Applicant: Dassault Systemes Solidworks Corporation, Waltham, MA 02451 (US)
(72) Inventor: Jodalli, Shravan, Bengaluru (IN); Popov, Alexei, Billerica (US); Bhagdev, Vaishali, Pune (IN); Rawat, Amit, Pune (IN); Yadav, Sumit, Acton (US)
(74) Representative: Bandpay & Greuter

(57) **Abstract**

Embodiments are directed to functionality for automatically trimming structural members in computer-aided design (CAD) models. An embodiment obtains a CAD model that includes a joint where a first structural member and a second structural member meet at an extremity of at least one of the first structural member and the second structural member. In turn, trimming is automatically applied to the joint using one or more processor executed rules. The one or more rules indicate the applied trimming based upon (i) geometry of the first structural member, (ii) geometry of the second structural member, and (iii) location of the joint where the first structural member and the second structural member meet.

## Description

### RELATED APPLICATIONS

This application claims the benefit of U.S. Provisional Application No. 63/512,447, filed on July 7, 2023 and U.S. Patent Application No. 18/498,219, filed on October 31, 2023. The entire teachings of the above applications are incorporated herein by reference.

### BACKGROUND

A number of existing products and systems are offered on the market for the design and simulation of objects, e.g., humans, parts, and assemblies of parts, amongst other examples. Such systems typically employ computer aided design (CAD) and/or computer aided engineering (CAE) programs. These systems allow a user to construct, manipulate, and simulate complex three-dimensional (3D) models of objects or assemblies of objects. These CAD and CAE systems, thus, provide a representation of modeled objects using edges, lines, faces, polygons, or closed volumes. Lines, edges, faces, polygons, and closed volumes may be represented in various manners, e.g., non-uniform rational basis-splines (NURBS).

CAD systems manage parts or assemblies of parts of modeled objects, which are mainly specifications of geometry. In particular, CAD files contain specifications, from which geometry is generated. From geometry, a representation is generated. Specifications, geometries, and representations may be stored in a single CAD file or multiple CAD files. CAD systems include graphic tools for representing the modeled objects to designers; these tools are dedicated to the display of complex objects. For example, an assembly may contain thousands of parts. A CAD system can be used to manage models of objects, which are stored in electronic files.

CAD and CAE systems use of a variety of CAD and CAE models to represent objects. These models may be programmed in such a way that the model has the properties (e.g., physical, material, and/or other physics based) of the underlying real-world object or objects that the model represents. Moreover, CAD/CAE models may be used to perform simulations of the real-word objects/environments that the models represent.

### SUMMARY

CAD/CAE based design of structures, e.g., steel and wooden structures, amongst other examples, involves creation of structural members, including vertical, horizontal, and inclined supports. A location where two or more such members meet is generally referred to as a corner or a joint. Typically, structures are complex and include multiple corners/joints.

In the context of designing a structure in a CAD environment/system, a user of the CAD system manually defines a "trimming" for each corner (i.e., joint) of the modeled structure. To define a trimming, the user selects and appropriately trims (i.e., defines the geometry of) ends of one or more of the members (structural members) at the corner. This trimming creates a desired comer-member placement and orientation. Users trim corner-members in various ways. For example, trimming may be performed by manipulating member orientation and/or a combination of trim planes. Corner trimming generally involves the user specifying a trim order that defines a sequential order in which the comer-members are trimmed at a corner.

Achieving desired trim geometry by specifying trim options and order for each individual corner in a structure is a tedious task which consumes significant time and effort. Embodiments solve this problem by providing functionality to automate applying corner trims where two or more members meet, e.g., three members.

In an example embodiment, trimming is applied based on how structural member extremities connect, i.e., meet. In other words, such an embodiment may apply trimming based on location of the j oint in which the structural members meet and the positions and orientations of the structural members in the j oint. Further, an embodiment can automatically apply trimming to members belonging to one or more patterns, e.g., a linear pattern, circular pattern, etc. One such embodiment applies automatic corner trims based on how structural members are connected at extremities.

Embodiments allow users to automate the corner trimming process on pattern instances (e.g., structural member instances) created as a part of pattern feature creation functionality, such as the pattern creation functionality that is available in CAD tools and applications, e.g., xFrame provided by Applicant-Assignee Dassault Systèmes SolidWorks Corporation (Waltham, MA). In an embodiment, the automatic trimming is implemented using predefined trim rules that automatically implement various commands that previously had to be manually performed/used. In an embodiment, patterned structural member instances are automatically trimmed in the computer model based on (i) the endpoints of the structural member instances, i.e., one or more extremities of the structural member, and (ii) how the endpoints terminate and interact with other structural members. According to an embodiment, the trim rules applied on the created pattern instances (i.e., structural member instances) are the same as the trim rules applied on a seed structural member at the time the seed structural member was created and trimmed using user commands.

An example embodiment is directed to a computer-implemented method that, first, identifies: (i) a seed structure member in a 3D CAD assembly, (ii) a pattern associated with the seed structure member, and (iii) instances of the identified pattern and the associated structure members within the 3D CAD assembly. Second, auto-trim functionality (e.g., the rules described herein) is applied to the identified structure members in the assembly.

Another example embodiment is directed to a computer-implemented method for automatically trimming structural members in a CAD model. In an embodiment, the method begins by obtaining the CAD model. The obtained CAD model includes a j oint where a first structural member and a second structural member meet at an extremity of at least one of the first structural member and the second structural member. In turn, automatic trimming is applied to the joint using one or more processor executed rules, e.g., the rules described herein. According to an embodiment, the one or more rules indicate the applied trimming based upon at least one of: (i) geometry of the first structural member, (ii) geometry of the second structural member, and (iii) location of the joint where the first structural member and the second structural member meet.

According to an embodiment, the geometry of the first structural member includes a cross-sectional profile of the first structural member, and the geometry of the second structural member includes a cross-sectional profile of the second structural member. Further, in an embodiment, geometry of a member can include dimensions, location, position, and orientation of a member, amongst other examples. Further still, in yet another embodiment, automatically applying trimming to the j oint includes trimming at least one of the first structural member and the second structural member.

Another embodiment further includes receiving: (i) an indication that the first structural member or the second structural member is a seed structural member, and (ii) an indication of a desired pattern. In turn, such an embodiment creates one or more structural member instances in the CAD model based upon the seed structural member and the indication of the desired pattern. To continue, trimming is automatically applied to respective joints of the one or more structural member instances using the one or more processor executed rules. In an embodiment, the indication of the seed structural member and the indication of the desired pattern may be user-input indications or user interactively communicated indications.

Embodiments may also automatically trim members in joints with three or more structural members. For instance, in an embodiment, in the joint, the first structural member, the second structural member, and a third structural member meet at an extremity of at least one of the first structural member, the second structural member, and the third structural member. In such an embodiment, the one or more rules indicate the applied trimming based upon: (i) the geometry of the first structural member, (ii) the geometry of the second structural member, (iii) geometry of the third structural member, and (iv) location of the joint where the first structural member, second structural member, and third structural member meet. Further, in such an embodiment, automatically applying trimming to the joint includes trimming at least one of the first structural member, the second structural member, and the third structural member.

Another embodiment is directed to a system for automatically trimming structural members in a computer-based model. In such an embodiment, the system includes a processor and a memory with computer code instructions stored thereon. The processor and the memory, with the computer code instructions, are configured to cause the system to implement any embodiments or combination of embodiments described herein.

Yet another embodiment is directed to a cloud computing implementation for automatically trimming structural members. Such an embodiment is directed to a computer program product executed by a server in communication across a network with one or more clients, where the computer program product comprises instructions which, when executed by a processor, causes the processor to implement any embodiments or combination of embodiments described herein.

It is noted that embodiments of the method, system, and computer program product may be configured to implement any embodiments, or combination of embodiments, described herein.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIG. 1 illustrates a CAD model with trimmed structural members.
FIG. 2 is a flowchart of a method for automatically trimming structural members according to an embodiment.
FIGs. 3-10 illustrate applying automatic trimming rules to CAD models according to embodiments.
FIG. 11A depicts a user interface where automatic member trimming is not selected and FIG. 11B depicts a resulting CAD model.
FIG. 12A depicts a user interface in an embodiment where automatic member trimming is selected and FIG. 12B depicts a resulting CAD model.
FIG. 13 is a flowchart of a method for trimming pattern-created structural members according to an embodiment.
FIG. 14A depicts a user interface where automatic member trimming is not selected for linear pattern created structural members and FIG. 14B depicts a resulting CAD model.
FIG. 15A depicts a user interface where automatic member trimming is selected for linear pattern created structural members and FIG. 15B depicts a resulting CAD model.
FIG. 16A depicts a user interface where automatic member trimming is not selected for circular pattern created structural members and FIG. 16B depicts a resulting CAD model.
FIG. 17A depicts a user interface where automatic member trimming is selected for circular pattern created structural members and FIG. 17B depicts a resulting CAD model.
FIG. 18 illustrates a computer network or similar digital processing environment in which embodiments may be implemented.
FIG. 19 is a diagram illustrating an example internal structure of a computer in the environment of FIG. 18.

### DETAILED DESCRIPTION

A description of example embodiments follows.

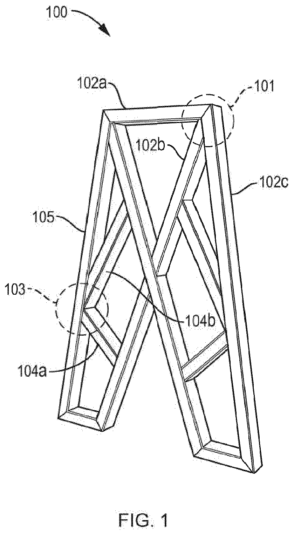

As described above, in the context of designing a structure in a CAD environment/system, a user of the CAD system defines a "trimming" for each corner of a modeled structure. FIG. 1 illustrates an example CAD model 100 with multiple corners/joints. For instance, FIG. 1 illustrates joint 101 with trimmed members 102a-c and joint 103 with trimmed members 104a-b and member 105 (which is not trimmed in j oint 103).

Applying corner trims at joints is a common task when creating structural members. The trimming can define how structural members, e.g., beams, are to be fabricated at the start and/or end of the member. To define a trimming, using existing methods, a user selects and appropriately trims (i.e., defines the geometry of) ends of one or more of members at a corner, i.e., joint. This trimming creates a desired comer-member placement and orientation. Users trim comer-members in various ways. For example, trimming may be performed by a user manipulating member orientation and/or a combination of trim planes. Corner trimming often involves the user specifying a trim order that defines a sequential order in which the comer-members are trimmed, i.e., cut, modified, etc., at a corner.

Achieving desired trim geometry by specifying trim options and order for each individual corner in a structure is a tedious task which consumes a significant amount of user time and effort. For instance, structure models are typically large and include multiple joints/corners, e.g., joints 101 and 103 in model 100, that require selection through rotating and zooming the model to apply corner trims. Embodiments solve these problems and provide functionality for automatically trimming members. Embodiments greatly reduce stress and human errors in structure models. Moreover, embodiments, reduce the repetitive selection of similar corners that is required by existing methods when applying corner trims. It is noted that while the terms member, structure member, and structural member are used herein, embodiments are not limited to automatically trimming members and, instead, embodiments may be utilized to trim any computer-based model elements.

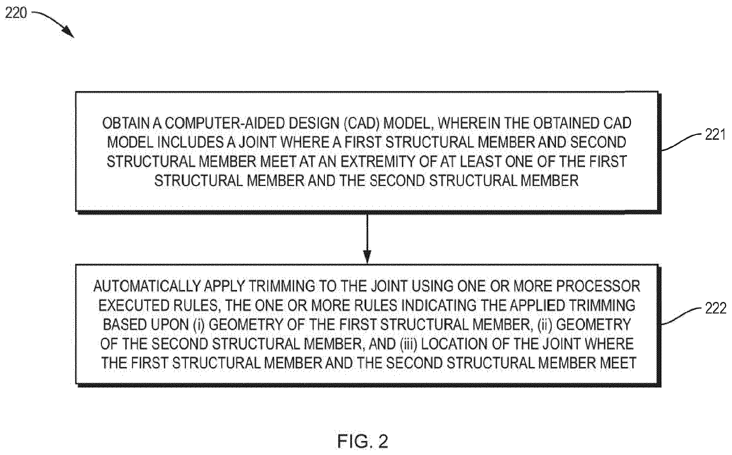

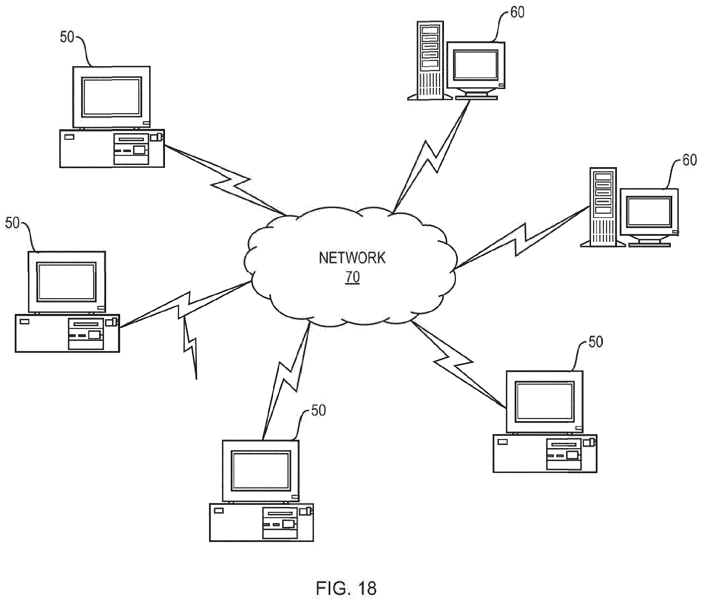

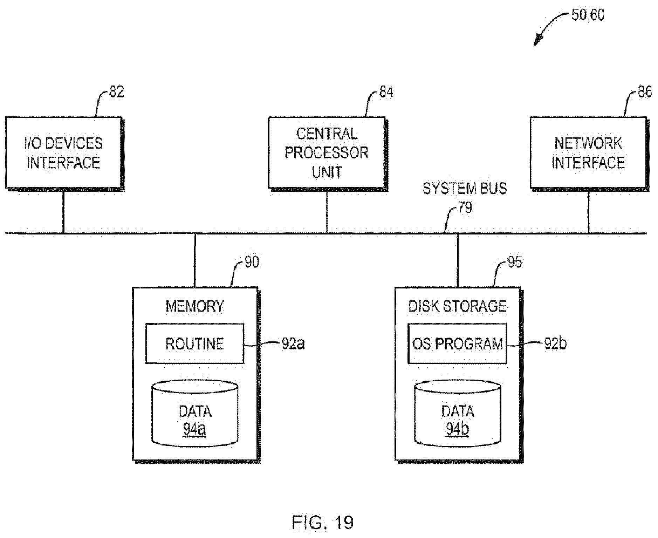

FIG. 2 is a flowchart of an example method 220, according to an embodiment, for automatically trimming structural members in CAD models. The method 220 is computer implemented and, as such, the functionality and effective operations, e.g., the steps 221-222, can be automatically implemented by one or more digital processors. Moreover, the method 220 can be implemented using any computer device or combination of computing devices known in the art. Amongst other examples, the method 220 can be implemented using the computer network environment described herein below in relation to FIG. 18 and/or the computer system described herein below in relation to FIG. 19.

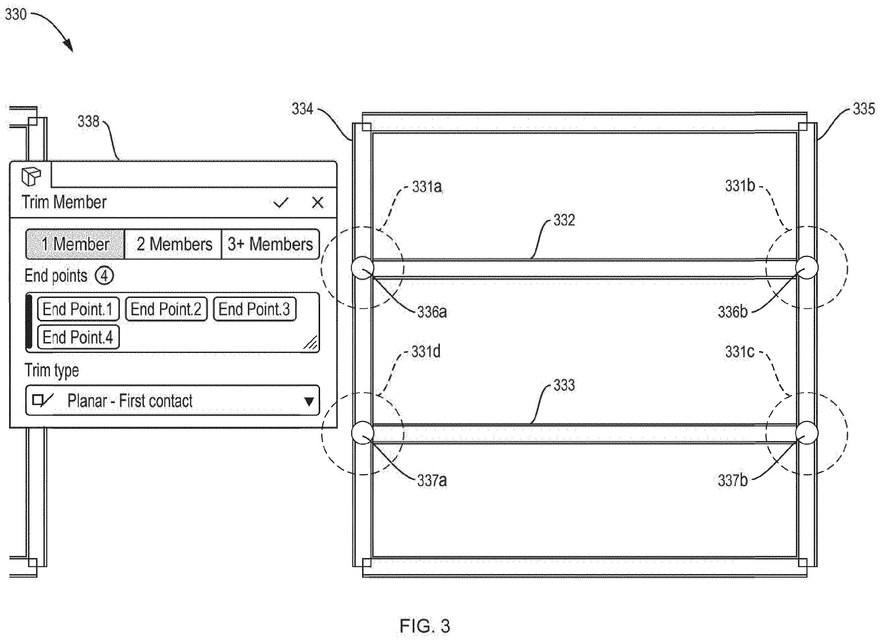

The method 220 begins at step 221 by obtaining a CAD model. In an embodiment, the obtained CAD model includes a joint, i.e., location, where a first structural member and a second structural member meet at an extremity, i.e., end, of at least one of the first structural member and the second structural member. To illustrate, FIG. 3 includes the joint 331a where the structural members 332 and 334 meet at the endpoint, i.e., extremity, 336a of the structural member 332. Returning to FIG. 2, to continue, at step 222, automatic trimming is applied to the joint using one or more processor executed rules, e.g., Rules 1-9 described herein below in relation to FIGs. 3-10. According to an embodiment, the one or more rules indicate the applied trimming based upon at least one of: (i) geometry of the first structural member, (ii) geometry of the second structural member, and (iii) location of the joint where the first structural member and the second structural member meet.

In embodiments of the method 220, the CAD model obtained at step 221 may be any CAD model known in the art. Further, the CAD model may be obtained at step 221 automatically or responsive to a user command. Further still, the model may be obtained from any point, e.g., computer memory/storage, communicatively coupled or capable of being communicatively coupled to a computing device implementing the method 220. Moreover, the CAD model may be obtained at step 221 responsive to user creation of the model, e.g., through a user drawing the CAD model in CAD design software.

In embodiments of the method 220, the geometries of the structural members, e.g., the first structural member and the second structural member, upon which the rules may indicate the trimming, may be any geometries/geometric properties known to those of skill in the art. For instance, in an embodiment, geometry of a member may include dimensions, location, position, and orientation of a member, amongst other examples. Moreover, according to an embodiment, the geometry of the first structural member includes a cross-sectional profile of the first structural member, and the geometry of the second structural member includes a cross-sectional profile of the second structural member. Amongst other examples, a cross-sectional profile may indicate that a structural member has a circular, square, C-section, I-section, T-section, angle iron, or custom cross-sectional profile, amongst other examples. In an example embodiment, structural members with circular cross-sectional profiles are trimmed at step 222 in accordance with particular rules and structural members with other cross-sectional profiles, e.g., square, angle iron, etc., are trimmed at step 222 in accordance with different rules (in comparison to the rules used to trim members with circular cross-sectional profiles).

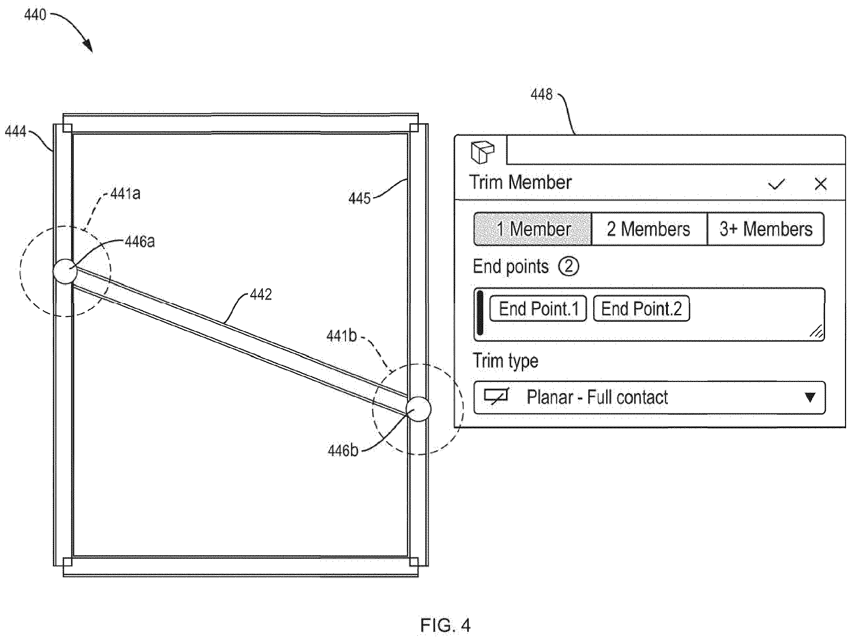

In an embodiment of the method 220, locations upon which rules may indicate the trimming to apply at step 222 refers to location of how the members meet. For example, location may include positioning and orientation of the members in relation to one another at the place, i.e., location, where the members meet. For instance, in an embodiment, example locations include members that meet at a location, e.g., position and orientation, where the members are perpendicular to each other, or a location where the members are at an angle to each other. To illustrate, in FIG. 3, described hereinbelow, the member 332 meets the member 334 at a location (e.g., of joint 331a) where member 332 is perpendicular to member 334. Similarly, in FIG. 4, described hereinbelow, the member 442 meets the member 444 at a location (e.g., of joint 441a) where member 442 is at an angle to member 444.

According to an embodiment, automatically applying trimming to the joint includes trimming at least one of the first structural member and the second structural member. For instance, applying the trimming at step 222 may include defining geometry of ends of one or more of the members at the corner. The trimming performed at step 222 may create a desired comer-member placement and orientation. Trimming may be performed at step 222 by manipulating member orientation and/or a combination of trim planes. In an embodiment, applying trim planes includes applying existing trimming functionality (i.e., "trim plane" functions) that is available in a CAD tool/software in which an embodiment is implemented. In such an embodiment, the one or more rules are used at step 222 to automatically select the trimming functionality that is applied. For instance, according to an embodiment, in the case where a member end (member 1) meets the "middle" of another member (member 2), if member 1 is perpendicular to member 2, a "Planar - First Contact" trim type (trim plane function) is applied, and if member 1 is non-perpendicular to member 2, a "Planar - Full Contact" (trim plane function) trim type is applied (if member 2 has a non-circular cross-sectional profile). It is noted that a "circular" cross-sectional profile may encompass any profile that does not include any "line" portion, e.g., an elliptical profile, and a profile does not need to be perfectly circular to be treated as circular with respect to the functionality described herein. To continue this example, if member 2 has a "circular" cross-sectional profile, an embodiment applies a "Body" trim type (trim plane function) regardless of an angle between member 1 and member 2. Further, comer/joint trimming at step 222 can include specifying a trim order that defines a sequential order in which the members are trimmed at ajoint/corner.

The method 220 implements a trimming at step 222 that is indicated by one or more rules. In an embodiment of the method 220, applying the trimming at step 220 includes identifying geometric properties of each structural member and the location of the comer/joint where the structural members meet. In turn, rules are searched to identify a given rule that pertains to, e.g., matches, the identified geometric properties and location, and the trimming indicated by the given rule is applied to the structural members/joint. Example rules that may be employed at step 222 are described hereinbelow in relation to FIGs. 3-10.

Another embodiment of the method 220 further includes receiving: (i) an indication that the first structural member or the second structural member is a seed structural member, and (ii) an indication of a desired pattern. In turn, such an embodiment creates one or more structural member instances, i.e., separate instances/copies of the seed structural member, in the CAD model based upon the seed structural member and the indication of the desired pattern. Trimming is then automatically applied to respective joints of the one or more structural member instances using the one or more processor executed rules. According to an embodiment, the indication of the desired pattern may include an indication of at least one of: pattern type, pattern direction, spacing between structural member instances, pattern length, and a number of structural member instances, amongst other examples. In an embodiment, the indication of the seed structural member and the indication of the desired pattern may be user-input indications or user interactively communicated indications.

Embodiments of the method 220 may also automatically trim members in joints with three or more structural members. For instance, in such an embodiment, in a joint, a first structural member, a second structural member, and a third structural member meet at an extremity of at least one of the first structural member, the second structural member, and the third structural member. In such an embodiment, the one or more rules indicate the applied trimming based upon (i) geometry of the first structural member, (ii) geometry of the second structural member, (iii) geometry of the third structural member, and (iv) location of the joint where the first structural member, second structural member, and third structural member meet. Further, in such an embodiment, automatically applying trimming to the joint includes trimming at least one of the first structural member, the second structural member, and the third structural member.

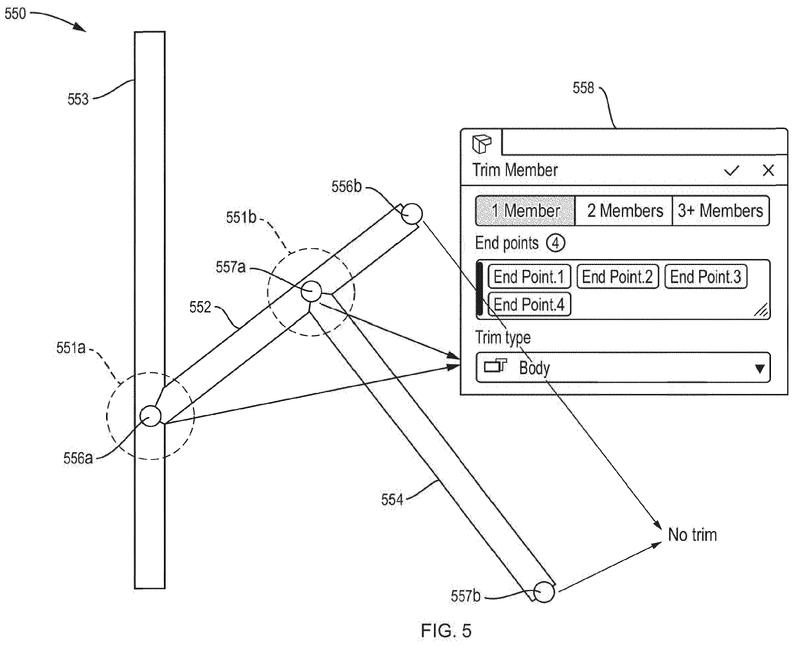

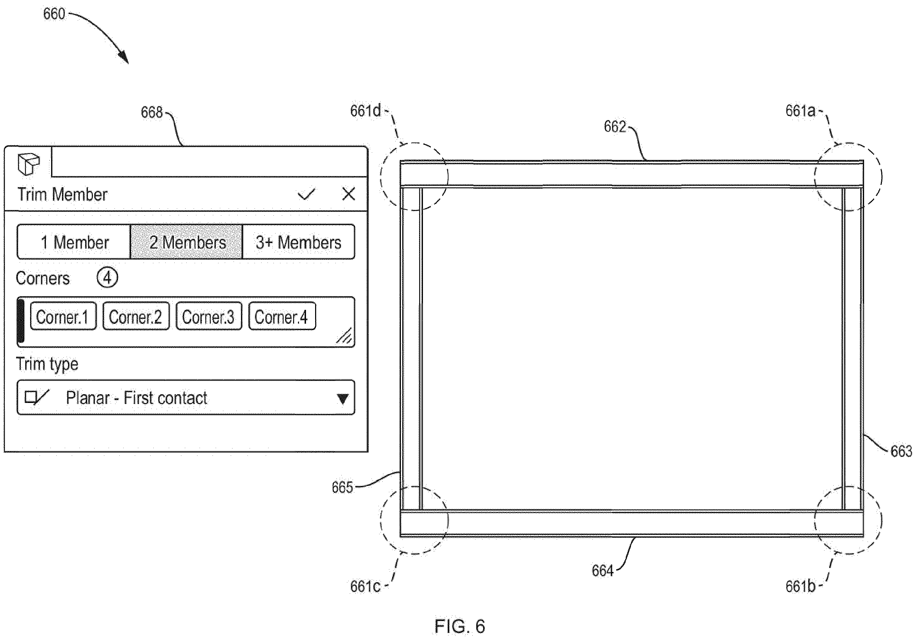

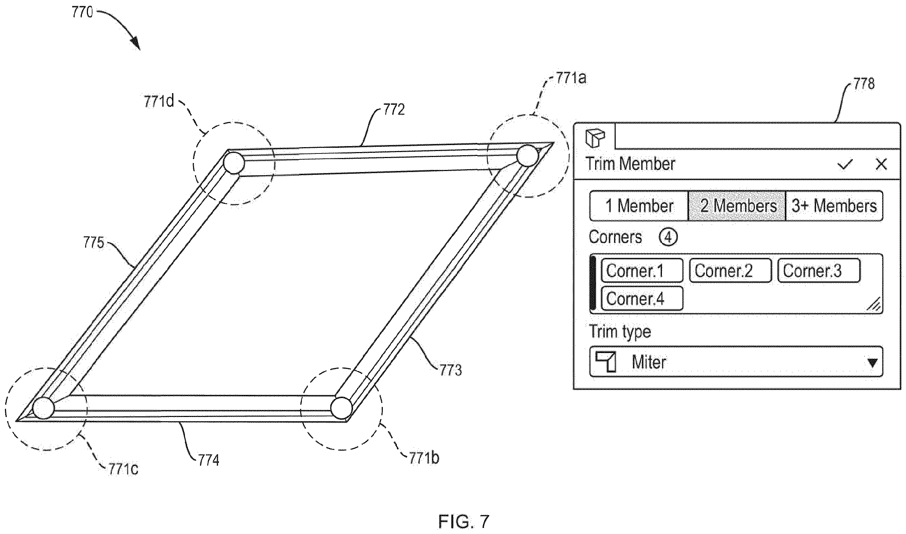

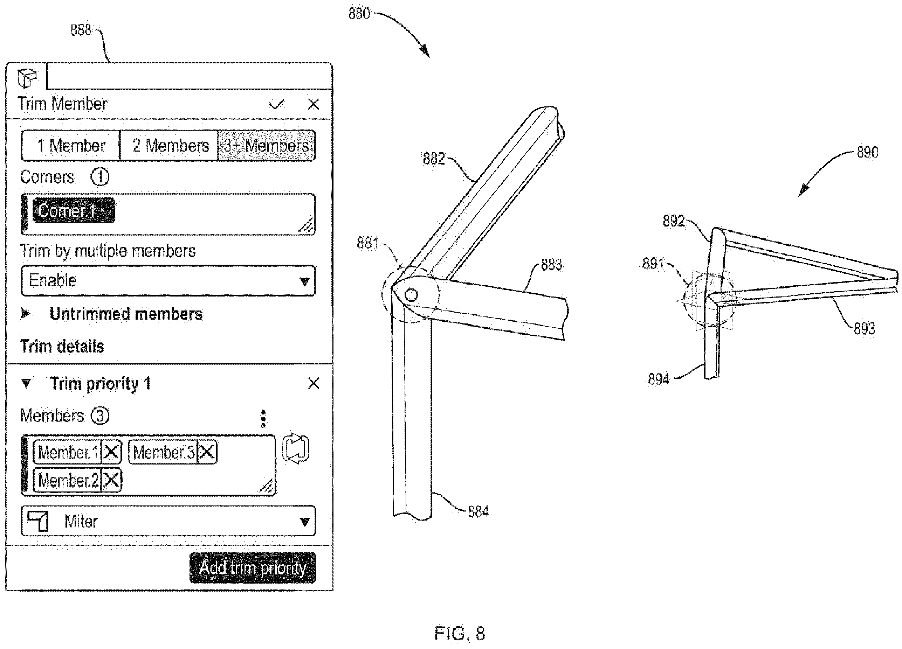

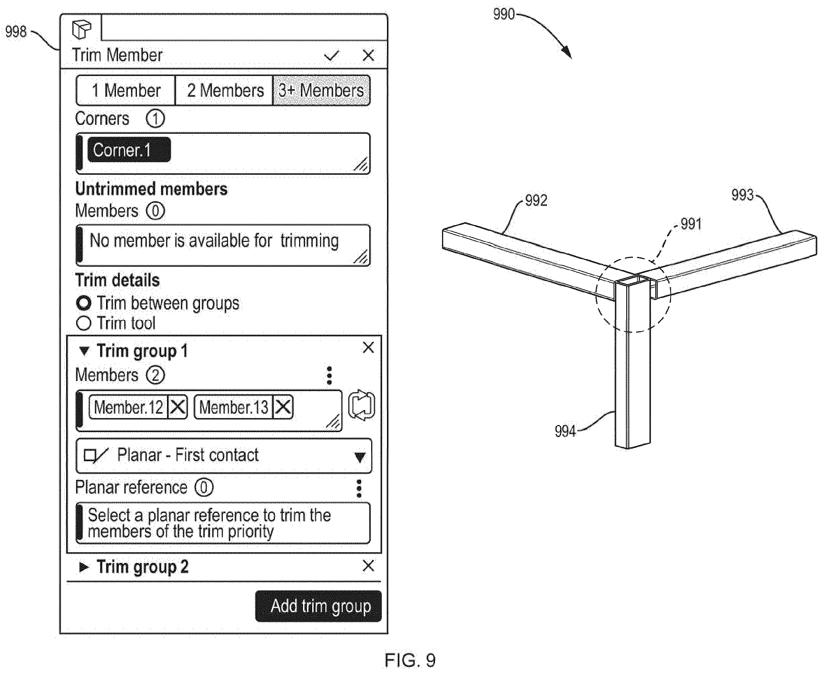

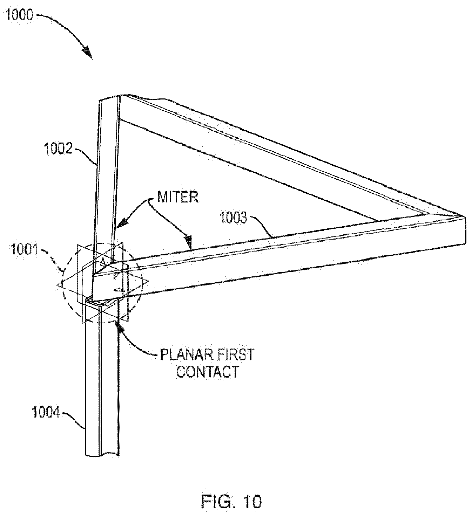

Embodiments, e.g., the method 220, may use a plurality of rules that indicate trimming to apply to corners/joints based on properties of the corner/joint and structural members of the j oint. Rules 1-9 are example rules that may be utilized, e.g., at step 222 of the method 220. Accompanying FIGs. 3-10 illustrate execution of the example automatic trimming Rules 1-9. In the context of Rules 1-9 described below, location pertains to how the members in the joint meet, e.g., whether the members meet at a right angle or the members meet at a non-right angle. Further, in the context of Rules 1-9 described below, geometry can include cross-sectional profile of members, e.g., a member having a circular, square, C, I, custom, etc., cross-sectional profile. In an embodiment, members with circular cross-sectional profiles are trimmed in accordance with Rule 4 (FIG. 5) and Rule 7 (FIG. 8) and members with other types of cross-sectional profiles are trimmed in accordance with Rules 1 (FIG. 5), 2 (FIG. 3), 3 (FIG. 4), 5 (FIG. 6), 6 (FIG. 7), 8 (FIG. 9), and 9 (FIG. 10).

### Rule 1

As an initial matter, Rule 1 indicates that if a member endpoint terminates in space, e.g., not intersecting with another member, the member is not trimmed. Application of Rule 1 is shown in FIG. 5, described hereinbelow, where the endpoint 556b of member 552 and the endpoint 557b of member 554, are not trimmed.

### Rule 2

Rule 2 indicates that if a member endpoint terminates orthogonal to a non-endpoint, e.g., a middle, of another member, trim to first contact. Execution of Rule 2 is shown in FIG. 3 in the CAD model 330 at the joints 331a-d. FIG. 3 also illustrates a user interface 338 that indicates the applied trimming. In joint 331a, the member 332 terminates orthogonally to member 334 and, likewise, in joint 331b, the member 332 terminates orthogonally to member 335. Similarly, in joint 331c, the member 333 terminates orthogonally to member 335 and, in joint 331d, the member 333 terminates orthogonally to member 334. Applying Rule 2, in joint 331a, endpoint 336a of member 332 is planarly trimmed at the point of contact with member 334. Similarly, in joint 331b, endpoint 336b of member 332 is planarly trimmed at the point of contact with member 335. Similar trimming is applied to joints 331d and 331c where, in joint 331d, endpoint 337a of member 333 is planarly trimmed at the point of contact with member 334 and, in joint 331c, endpoint 337b of member 333 is planarly trimmed at the point of contact with member 335.

### Rule 3

Rule 3 indicates that if a member endpoint terminates at an angle to a non-endpoint, e.g., a middle, of another member, trim to full contact. According to an embodiment, trimming to full contact means trimming so that an entire endpoint of a member contacts the non-endpoint of the other member. Execution of Rule 3 is shown in FIG. 4 in the CAD model 440 at the joints 441a-b. FIG. 4 also includes a user interface 448 that indicates the applied trimming. In joint 441a, the member 442 terminates at an angle to a non-endpoint of member 444 and, likewise, in joint 441b, the member 442 terminates at an angle to a non-endpoint of member 445. Applying Rule 3 to the joints 441a-b results in the endpoint 446a of member 442 being planarly trimmed to full contact with member 444. Similarly, in joint 441b, endpoint 446b of member 442 is planarly trimmed to full contact with member 445.

### Rule 4

Rule 4 indicates that if a round member endpoint terminates to a non-endpoint, e.g., a middle, of another member, trim to body. According to an embodiment, trimming to body means trimming an entire endpoint to mate to the body shape, e.g., round, of another member. Execution of Rule 4 is shown in FIG. 5 in the CAD model 550 at the joints 551a-b. FIG. 5 also includes an user interface 558 that indicates the applied trimming. In joint 551a, the round member 552 terminates at an angle to the non-endpoint of round member 553 and, likewise, in joint 551b, the round member 554 terminates orthogonally to a non-endpoint of member 552. Applying Rule 4 to the joints 551a-b results in the endpoint 556a of member 552 being trimmed to fit the round body of member 553. Similarly, in joint 551b, endpoint 557a of member 554 is trimmed to fit the round body of member 552.

### Rule 5

Rule 5 indicates that if two members meet at a right angle, create a planar trim at the point of first contact. Execution of Rule 5 is shown in FIG. 6 in the CAD model 660 at the joints 661a-d. FIG. 6 also illustrates an user interface 668 that indicates the applied trimming. In joint 661a, the members 662 and 663 meet at a right angle; at joint 661b, the member 663 and 664 meet at a right angle; at joint 661c, member 664 and 665 meet at a right angle; and at joint 661d, members 665 and 662 meet at a right angle. At each of joints 661a-d the members 662-665 are planarly trimmed at the point of first contact.

### Rule 6

Rule 6 indicates that if two members meet at a non-right angle, create a miter contact trim, i.e., trim each member to an angle that mates with the angle of the other member. Execution of Rule 6 is shown in FIG. 7 in the CAD model 770 at the joints 771a-d. FIG. 7 also includes an user interface 778 that indicates the applied trimming. In joint 771a, the members 772 and 773 meet at a non-right angle; at joint 771b, the members 773 and 774 meet at a non-right angle; at joint 771c, members 774 and 775 meet at a non-right angle; and at joint 771d, members 775 and 772 meet at a non-right angle. At each of joints 771a-d the members 772-775 are trimmed at angles to mate with the angle of the other member. Specifically, in the joint 771a, the members 772 and 773 are each trimmed to a mating angle; in the joint 771b, the members 773 and 774 are each trimmed to a mating angle; in the joint 771c, the members 774 and 775 are each trimmed to a mating angle; and in the joint 771d, the members 775 and 772 are each trimmed to a mating angle. In an embodiment, a mating angle between two members is determined by dividing the angle between the two members in half. To illustrate, consider the joint 771a where the members 772 and 773 meet. The angle between the members 772 and 773 is 45° and, thus, the mating angle between the members is 22.5° and the members 772 and 773 are each cut to a 22.5° angle.

### Rule 7

Rule 7 indicates that if three circular members meet at a non-right angle or a right angle, create a three-way miter corner, i.e., trim each member to an angle that mates with the angles of the other members. Execution of Rule 7 is shown in FIG. 8 in the CAD model 880 at the joint 881 (illustrating members meeting at a right angle) and in the CAD model 890 in the joint 891 (illustrating members meeting at a non-right angle). FIG. 8 also illustrates an example user interface 888 that indicates the applied trimming (in the CAD model 880). In joint 881 the members 882, 883, and 884 meet at a right angle. Applying Rule 7 to the joint 881 results in each member 882-884 being trimmed at an angle to mate with the angle of the other members. Specifically, in the joint 881, the members 882, 883, and 884 are each trimmed to a mating angle. In the joint 891, the members 892, 893, and 894 meet at a non-right angle. Applying Rule 7 to the joint 891 results in each member 892-894 being trimmed at an angle to mate with the angle of the other members. Specifically, in the joint 891, the members 892, 893, and 894 are each trimmed to a mating angle. In an embodiment, the trimming is applied to the members 882-884 and 892-894 by automatically selecting and executing (through use of one or more rules) a miter trim functionality in an existing CAD software application.

### Rule 8

Rule 8 indicates that if three members meet at a right angle, trim the three members in the following priority (i) planarly trim two members at a point of first contact and (ii) planarly trim the remaining member at the point of first contact with the other members. The application of Rule 8 is shown in FIG. 9 in the CAD model 990 at the joint 991. FIG. 9 also illustrates an example user interface 998 that indicates the applied trimming. In joint 991 the members 992, 993, and 994 meet at a right angle. Applying Rule 8 to the joint 991 results in the members 992 and 994 being planarly trimmed at the point of first contact and, in turn, the member 993 being planarly trimmed at the point of first contact with the trimmed members 992 and 994. In this example, the trimming of the members 992 and 994 is given first priority, and the trimming of the member 993 is given second priority.

### Rule 9

Rule 9 indicates that if three or more members meet at a non-right angle, create a miter corner between the members meeting at an angle and planar trim the third member at the point of first contact with the members meeting at the angle. Execution of Rule 9 is shown in FIG. 10 in the CAD model 1000 at the joint 1001. Applying Rule 9 to the joint 1001 results in the members 1002 and 1003 being trimmed at an angle, i.e., mitered, and, in turn, the member 1004 being planarly trimmed at the point of first contact with the trimmed members 1002 and 1003. In this example, the trimming of the members 1002 and 1003 is given first priority, and the trimming of the member 1004 is given second priority.

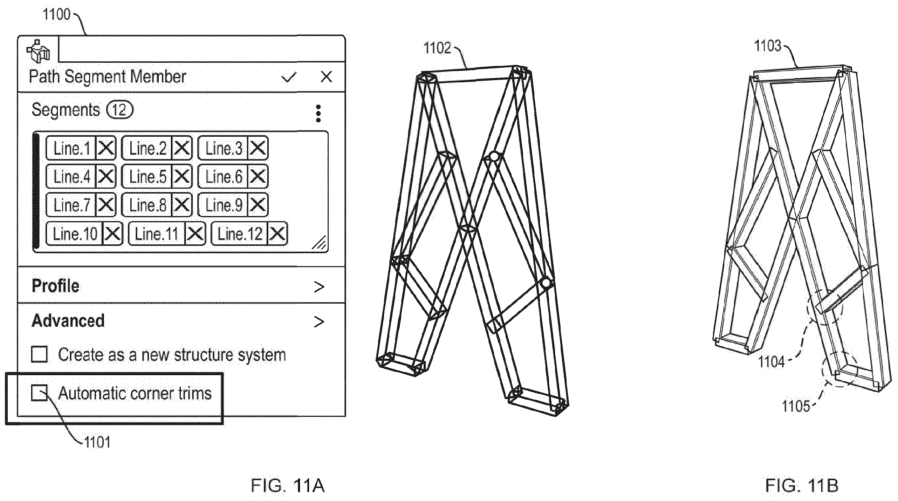

In an embodiment, users can select whether to apply the automatic corner trim functionality described herein on an existing model and the structural members therein. In an embodiment, such selection is performed via a user interface. FIG. 11A depicts an example user interface 1100 where automatic member trimming is not selected (e.g., the automatic corner trim checkbox 1101 is unchecked) for the CAD model 1102. FIG. 11B depicts the CAD model 1103, which is the CAD model 1102 without corner trimming applied. It can be seen in the model 1103, that not applying trimming causes penetrations, e.g., in joint 1104, and overhangs, e.g., in joint 1105.

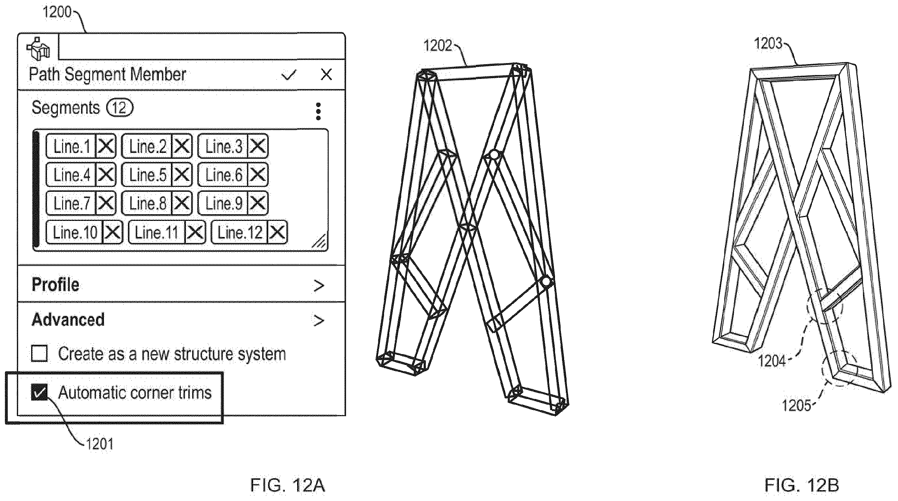

In contrast, FIG. 12A depicts an example user interface 1200 where automatic member trimming is selected (e.g., the automatic corner trim checkbox 1201 is checked) for the CAD model 1202. FIG. 12B depicts the CAD model 1203, which is the CAD model 1202 with corner trimming applied. In contrast to the model 1103 depicted in FIG. 11B, in the model 1203, penetrations, e.g., at joint 1204, and overhangs, e.g., at joint 1205, are eliminated.

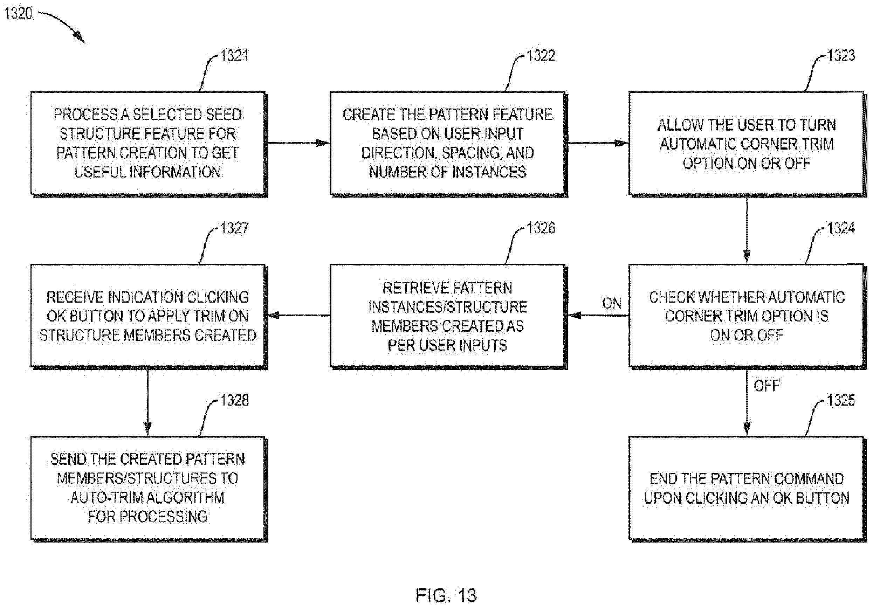

In addition to applying trimming to existing members of a CAD model, embodiments can also apply trimming to CAD model members at the time of creation of said members. FIG. 13 is a flow chart of one such example method embodiment 1320 where structural members are created in accordance with a user selected pattern and where the created structural members are automatically trimmed.

The method 1320 starts at step 1321 where an indication of a selected seed structural member is received and the seed structural member is processed to determine information about the seed structural member. According to an embodiment, the information determined at step 1321 includes structure system of the seed member, the seed member's container, seed member start and end points, and a reference for pattern creation. According to an embodiment, a structure system is an ordered geometrical set that holds the structural entities, a container is a structure/arrangement to save objects, and a reference is a direction in which pattern instances are created. At step 1322, pattern features, e.g., structural member instances, are created based upon the information determined at step 1321 and user input, e.g., direction, spacing, and number of instances, amongst other examples. In an embodiment, seed member start and end points retrieved at step 1321 are used at step 1322 to find the reference point (i.e., a point used to calculate location, etc., for other members) for the pattern creation and this reference point is used at step 1322 as a reference for parameters like direction and spacing given by a user for pattern creation. To continue, at step 1323, the user is provided with the ability to turn automatic corner trim functionality off or on. In an embodiment, the user can turn trim functionality off and on using a check box provided in a user interface. Step 1324 checks whether trim functionality is on or off. If trim functionality is turned off, the method 1320 moves to step 1325, which ends the pattern creation command, e.g., responsive to a user clicking an okay button. Returning to step 1324, if automatic corner trim functionality is turned on, the method 1320 moves to step 1326 where the structure member instances created per the information determined at step 1321 and user inputs from step 1322, are retrieved. According to an embodiment, retrieving the structure member instances includes identifying the structure member instances and storing an identifier of each identified structure member instance. In turn, at step 1327, an indication is received, e.g., responsive to a user clicking an okay button, to apply trimming, on the created structural member instances. In response, at step 1328, the created structure member instances are automatically trimmed. In an embodiment, performing the trimming at step 1328 includes retrieving the end points of the structure member instances using the previously stored identifiers and, in turn, applying the trimming to the retrieved end points. According to an embodiment, the structure members are automatically trimmed using the methods described herein, e.g., the method 220 and/or Rules 1-9.

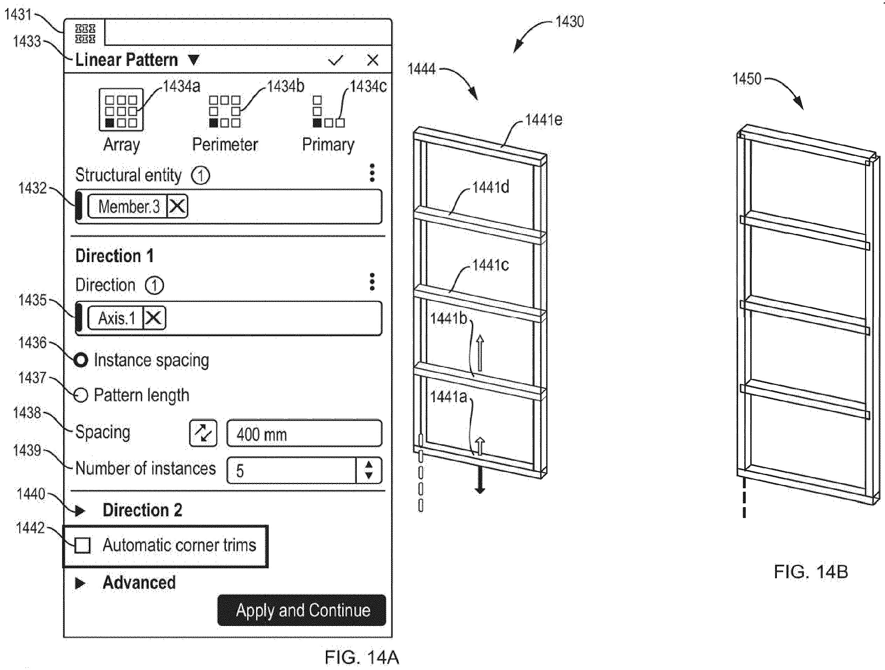

FIGs. 14A-B, 15A-B, 16A-B, and 17A-B illustrate implementations of the method 1320 of FIG. 13.

FIGs. 14A-B illustrate an example implementation of an embodiment of the method 1320. FIG. 14A depicts a user interface 1430 that includes a member creation graphical user interface (GUI) 1431 and also displays the CAD model 1444. The member creation interface 1431 includes the menu 1432 that is employed by a user to select a seed structure. The GUI 1431 also includes menu items for the user to select the pattern type 1433 linear pattern and linear sub-pattern options 1434a-c (array, perimeter, and primary, respectively) and, further includes dropdowns/inputs 1435-1440 to provide desired pattern characteristics, namely, direction, instance spacing type, pattern length type, spacing distance, number of instances, and direction, respectively.

To illustrate the method 1320 in the context of FIGs. 14A-B, at step 1321, the user selects a seed structure 1441a via the menu item 1432 and the seed structure 1441a is processed at step 1321. The user also indicates in the drop down 1433 of the GUI 1431 that a linear pattern type and linear sub-pattern option 1434a array is desired. Next, at step 1322, the desired characteristics provided via inputs 1433-1440 are processed to create the additional structure member instances 1441b-e. To continue, step 1323 allows the user to turn corner trim on or off via the checkbox 1442. In this example, the status of the checkbox 1442 is analyzed at step 1324 and it is determined that corner trim functionality is off. In turn, the method 1320 moves to step 1325 where the CAD model 1450 of FIG. 14B is created and the method 1320 ends.

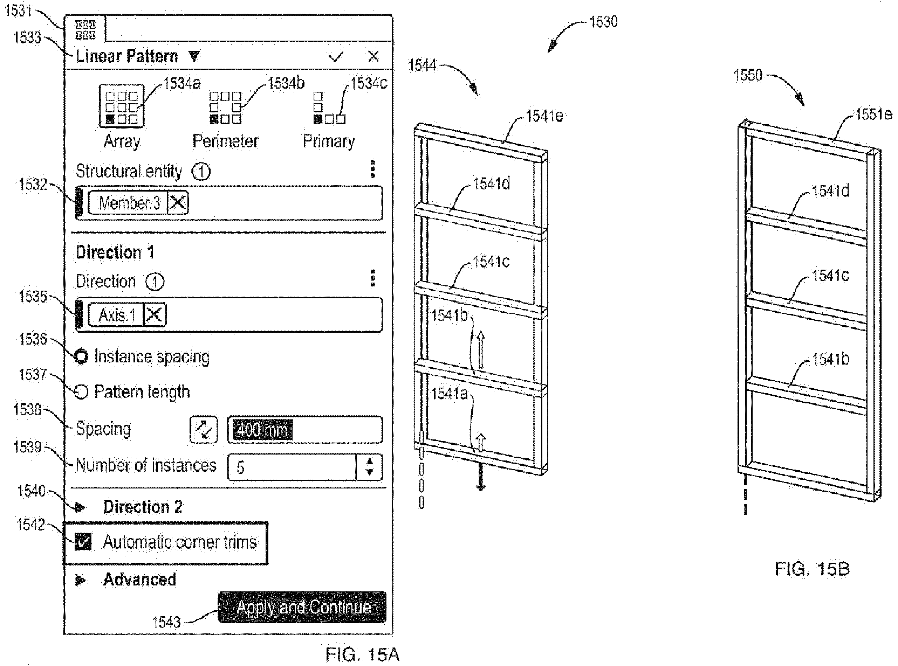

Similarly to FIGs. 14A-B, FIGs. 15A-B illustrate an embodiment of the method 1320, however, in FIGs. 15A-B, automatic corner trim is applied. FIG. 15A depicts a user interface 1530 that includes a member creation GUI 1531 and a CAD model 1544. The member creation interface 1531 includes the menu item 1532 that is employed by a user to select a seed structure. The GUI 1531 also includes menu items for the user to select the pattern type 1533 linear pattern and linear sub-pattern options 1534a-c (array, perimeter, and primary, respectively) and, further includes dropdowns/inputs 1535-1540 to provide desired pattern characteristics, namely, direction, instance spacing type, pattern length type, spacing distance, number of instances, and direction, respectively.

To illustrate the method 1320 in the context of FIGs. 15A-B, at step 1321, the user selects a seed structure 1541a via the menu item 1532 and the seed structure 1541a is processed at step 1321. The user also indicates in the drop down 1533 of the GUI 1531 that a linear pattern type and linear sub-pattern option 1534a array is desired. Next, at step 1322, the desired characteristics provided via inputs 1533-1540 are processed to create the additional structure member instances 1541b-e. To continue, step 1323 allows the user to turn corner trim on or off via the checkbox 1542. In this example, the status of the checkbox 1542 is analyzed at step 1324 and it is determined that corner trim functionality is on. In turn, the method 1320 moves to step 1326 where the structure member instances 1541b-e created in accordance with the input are retrieved. At step 1327, an indication is received (e.g., responsive to user clicking of button 1543) to proceed with applying the trim to members 1541b-e. Finally, at step 1328, the member instances 1541b-e are automatically trimmed, e.g., by processing said instances using an auto trim algorithm described herein, such as the method 220 and/or Rules 1-9. FIG. 15B illustrates the resulting CAD model 1550 with trimmed member instances 1551b-e that correspond to untrimmed instances 1541b-e.

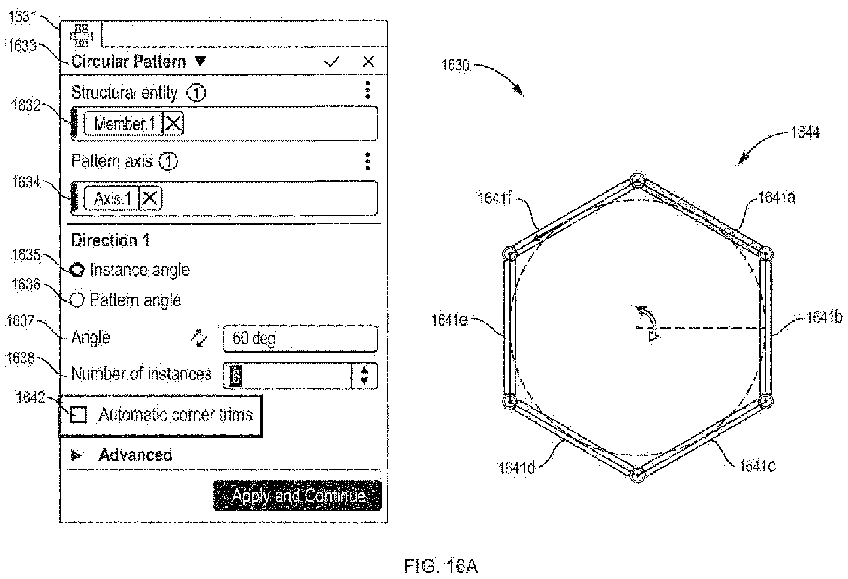

FIGs. 16A-B illustrate another example implementation in which an embodiment of the method 1320 is implemented. FIG. 16A depicts a user interface 1630 that includes a member creation GUI 1631 and a CAD model 1644. The member creation interface 1631 includes the menu item 1632 that is employed by a user to select a seed structure. The GUI 1631 also includes menu items for the user to select the pattern type 1633 circular pattern and, further includes dropdowns/inputs 1634-1638 to provide desired pattern characteristics, namely, pattern axis, instance angle type, pattern angle type, angle degree, and number of instances, respectively.

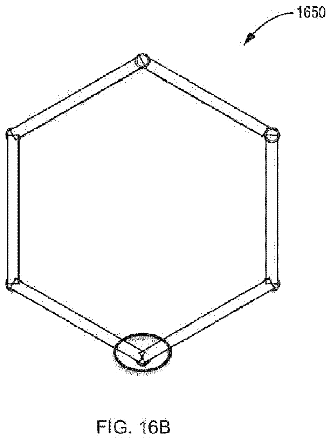

To illustrate the method 1320 in the context of FIGs. 16A-B, at step 1321, the user selects a seed structure 1641a via the menu item 1632 and the seed structure 1641a is processed at step 1321. Next, at step 1322, the desired characteristics, provided via inputs 1634-1638, are processed to create the additional structure member instances 1641b-f. To continue, step 1323 allows the user to turn corner trim on or off via the checkbox 1642. In this example, the status of the checkbox 1642 is analyzed at step 1324 and it is determined that corner trim functionality is off. In turn, the method 1320 moves to step 1325 where the CAD model 1650 of FIG. 16B is created and the method 1320 ends.

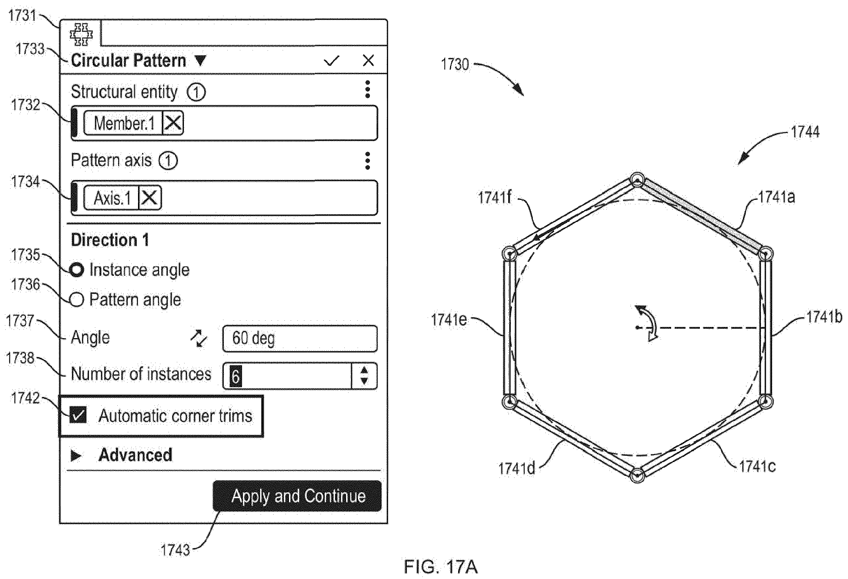

Similarly to FIGs. 16A-B, FIGs. 17A-B illustrate an implementation in which an embodiment of the method 1320 is implemented, however, in FIGs. 17A-B, automatic corner trim is applied. FIG. 17A depicts a user interface 1730 that includes a member creation GUI 1731 and a CAD model 1744. The member creation interface 1731 includes the menu item 1732 that is employed by a user to select or otherwise indicate a seed structure. The GUI 1731 also includes menu items for the user to select the pattern type 1733 circular pattern and, further includes dropdowns/inputs 1734-1738 to provide desired pattern characteristics, namely, pattern axis, instance angle type, pattern angle type, angle degree, and number of instances, respectively.

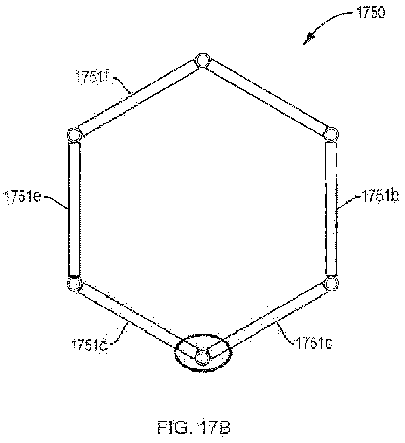

To illustrate the method 1320 in the context of FIGs. 17A-B, at step 1321, the user selects a seed structure 1741a via the menu item 1732 and the seed structure 1741a is processed at step 1321. Next, at step 1322, the desired characteristics for the pattern, provided via inputs 1734-1738, are processed to create the additional structure member instances 1741b-f. To continue, step 1323 allows the user to turn corner trim on or off via the checkbox 1742. In this example, the status of the checkbox 1742 is analyzed at step 1324 and it is determined that corner trim functionality is on. In turn, the method 1320 moves to step 1326 where the structure member instances 1741b-f, created in accordance with the input, are retrieved. At step 1327, an indication is received (e.g., responsive to a user clicking button 1743) to proceed with applying the trim to members 1741b-f. Finally, at step 1328, the member instances 1741b-f are automatically trimmed, e.g., by processing said instances using an automatic trim algorithm described herein, such as the method 220 and/or Rules 1-9. FIG. 17B illustrates the resulting CAD model 1750 with trimmed member instances 1751b-f that correspond to untrimmed instances 1741b-f.

Embodiments allow users to automate the corner trimming process on any structural members in a CAD model. Embodiments can be employed in the fields of mechanical design, civil design, and furniture design, amongst other examples. For instance, the automatic corner trim functionality described herein can be used for the design of real-world objects, e.g., a bridge, and can be used for the simulation of existing real-world objects. To illustrate, an embodiment can be used to simulate an existing bridge by measuring structural members of the bridge, and using the measurements to create a CAD model that reflects the measurements. The automatic corner trim functionality described herein, e.g., method 220, can be used to speed up the process of creating the CAD model that reflects the measurements. In turn, the CAD model can be used to determine the current operational capacity of the bridge.

Moreover, embodiments can automate the corner trimming process on pattern instances (e.g., structure member instances) created as a part of pattern feature creation functionality in xFrame. In an embodiment, automatic trimming is implemented using predefined trim rules that automatically implement various commands that previously had to be manually performed/used. In an embodiment, patterned structural member instances are automatically trimmed in the computer model based on their endpoints, i.e., one or more extremities of the structural member, and how their endpoints terminate and interact with other structure members. According to an embodiment, the trim rules applied on the created pattern instances are the same as the trim rules applied on a seed structure member at the time the seed structure member was created and trimmed using user commands.

Embodiments provide a faster method of applying corner trims during member creation and during pattern creation in a computer-based model, e.g., a CAD structural model. Advantageously, embodiments reduce the chances of human error due to selection or misunderstanding. Further, as described herein, structure models are typically big, and navigating to the members and applying corner trims is time-consuming and painful. By automatically trimming corners using the functionality described herein, embodiments reduce the time it takes to create models with corner trims and also improve the ergonomics of users. For example, embodiments reduce the number of comers/j oints that must be navigated to by users and manually trimmed.

### Computer Support

FIG. 18 illustrates a computer network or similar digital processing environment in which embodiments of the present disclosure may be implemented.

Client computer(s)/devices 50 and server computer(s) 60 provide processing, storage, and input/output devices executing application programs and the like. The client computer(s)/devices 50 can also be linked through communications network 70 to other computing devices, including other client devices/processes 50 and server computer(s) 60. The communications network 70 can be part of a remote access network, a global network (e.g., the Internet), a worldwide collection of computers, local area or wide area networks, and gateways that currently use respective protocols (TCP/IP, Bluetooth^{®}, etc.) to communicate with one another. Other electronic device/computer network architectures are suitable.

Client computers/devices 50 and/or servers 60 may be configured, alone or in combination, to implement the embodiments described herein, e.g., the methods 220 and 1320, amongst other examples. The server computers 60 may not be separate server computers but part of cloud network 70.

FIG. 19 is a diagram of an example internal structure of a computer (e.g., client processor/device 50 or server computers 60) in the computer system of FIG. 18. Each computer 50, 60 contains a system bus 79, where a bus is a set of hardware lines used for data transfer among the components of a computer or processing system. The system bus 79 is essentially a shared conduit that connects different elements of a computer system (e.g., processor, disk storage, memory, input/output ports, network ports, etc.) that enables the transfer of information between the elements. Attached to the system bus 79 is an input/output (I/O) device interface 82 for connecting various input and output devices (e.g., keyboard, mouse, displays, printers, speakers, etc.) to the computer 50, 60. A network interface 86 allows the computer to connect to various other devices attached to a network (e.g., network 70 of FIG. 18). Memory 90 provides volatile storage for computer software instructions 92a and data 94a used to implement an embodiment of the present disclosure (e.g., the methods 220, 1320, etc.). Disk storage 95 provides non-volatile storage for computer software instructions 92b and data 94b used to implement an embodiment of the present disclosure. A central processor unit 84 is also attached to the system bus 79 and provides for the execution of computer instructions.

Embodiments or aspects thereof may be implemented in the form of hardware including but not limited to hardware circuitry, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, hardware, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and, thus, the data processors described herein are intended for purposes of illustration only and not as a limitation of the embodiments.

The teachings of all patents, published applications and references cited herein are incorporated by reference in their entirety.

While example embodiments have been particularly shown and described, it will be understood by those skilled in the art that various changes in form and details may be made therein without departing from the scope of the embodiments encompassed by the appended claims.

## Claims

1. A computer-implemented method for automatically trimming structural members in a computer-aided design (CAD) model, the method comprising:
obtaining the CAD model, wherein the obtained CAD model includes a joint where a first structural member and a second structural member meet at an extremity of at least one of the first structural member and the second structural member; and
automatically applying trimming to the joint using one or more processor executed rules, the one or more rules indicating the applied trimming based upon (i) geometry of the first structural member, (ii) geometry of the second structural member, and (iii) location of the joint where the first structural member and the second structural member meet.

2. The method of Claim 1 wherein the geometry of the first structural member includes a cross-sectional profile of the first structural member, and the geometry of the second structural member includes a cross-sectional profile of the second structural member.

3. The method of Claim 1 or 2 wherein automatically applying trimming to the joint includes trimming at least one of the first structural member and the second structural member.

4. The method of Claim 1, 2 or 3 further comprising:
receiving: (i) an indication that the first structural member or the second structural member is a seed structural member, and (ii) an indication of a desired pattern;
creating one or more structural member instances in the CAD model based upon the seed structural member and the indication of the desired pattern; and
automatically applying trimming to respective joints of the one or more structural member instances using the one or more processor executed rules.

5. The method of any one of Claims 1 to 4 wherein, in the joint, the first structural member, the second structural member, and a third structural member meet at an extremity of at least one of the first structural member, the second structural member, and the third structural member.

6. The method of Claim 5 wherein the one or more rules indicate the applied trimming based upon (i) the geometry of the first structural member, (ii) the geometry of the second structural member, (iii) geometry of the third structural member, and (iv) location of the j oint where the first structural member, second structural member, and third structural member meet.

7. The method of Claim 5 or 6 wherein automatically applying trimming to the joint includes trimming at least one of the first structural member, the second structural member, and the third structural member.

8. A system for automatically trimming structural members in a computer-aided design (CAD) model, the system comprising:
a processor; and
a memory with computer code instructions stored thereon, the processor and the memory, with the computer code instructions, being configured to cause the system to perform the method of any one of Claims 1 to 7.

9. A non-transitory computer program product for automatically trimming structural members in a computer-aided design (CAD) model, the computer program product executed by a server in communication across a network with one or more client and comprising:
a computer readable medium, the computer readable medium comprising program instructions which, when executed by a processor, causes the processor to perform the method of any one of Claims 1 to 7.

10. A computer program comprising program instructions which, when executed by a processor, causes the processor to perform the method of any one of Claims 1 to 7.
